# EUROPEAN PATENT APPLICATION

(11) **EP 4 020 634 A1**
(43) Date of publication of application: **29.06.2022**
(21) Application number: 21214953.8
(22) Date of filing: 16.12.2021
(51) Int. Cl.: H01M 4/525, H01M 10/052, H01M 10/52, H01M 4/131, H01M 4/02

(54) **POROUS INORGANIC PARTICLES AND BATTERY INCLUDING THE SAME**

(30) Priority: 22.12.2020 KR 20200181355
(71) Applicant: Kokam Co., Ltd., Gyeonggi-do 16201 (KR)
(72) Inventor: HEO, Yoon Jeong, 16201 Suwon-Si (KR); KO, Sung Tae, 16201 Suwon-Si (KR)
(74) Representative: V.O.

(57) **Abstract**

Provided are porous inorganic particles which may be added to an inner portion and/or an outer portion of a secondary battery including a nickel-rich lithium composite transition metal oxide active material in which nickel accounts for 50 mol% or more of all metals excluding lithium, wherein the porous inorganic particles include oxides of four or more types of metals selected from the group consisting of Al, Si, Na, Ca, and K. When these porous inorganic particles are used, swelling of a secondary battery may be suppressed, and a nickel-rich lithium composite transition metal oxide may be stably used as an active material of a secondary battery.

## Description

### BACKGROUND

The present disclosure relates to porous inorganic particles and a battery including the same.

Recently, interest in energy storage technology has been increasing. As the applications of energy storage technology expand, such as to mobile phones, camcorders, notebook PCs, electric vehicle power sources, etc., there is an increasing demand for high energy density batteries as power sources. Lithium secondary batteries are being actively researched.

Lithium secondary batteries are secondary batteries based on the principle that lithium ions elute from a positive electrode and move to a negative electrode, are intercalated into the negative electrode during charging, and are deintercalated from the negative electrode and return to the positive electrode during discharging.

Lithium-containing transition metal oxides may be used as active materials for these lithium secondary batteries, and the lithium-containing transition metal oxides may be used as positive electrode active materials or negative electrode active materials.

As positive electrode active materials for the lithium secondary batteries, cobalt-based oxides containing lithium (e.g., LiCoO₂), lithium manganese oxides having a layered crystal structure (e.g., LiMnO₂), lithium oxides having a spinel crystal structure (e.g., LiMn₂O₄), lithium iron phosphate (e.g., LiFePO₄) commonly referred to as an olivine structure, and the like, are commonly used. Among these, LiCoO₂ is the most widely used because LiCoO₂ has excellent cycle characteristics and is easily manufactured. Since a large amount of expensive cobalt is required to manufacture LiCoO₂, LiCoO₂ may not be cost-effective for use as a power source in fields that require large-sized secondary batteries, such as electric vehicles.

Accordingly, in recent years, lithium nickel transition metal oxides, which are more cost-effective than LiCoO₂ and capable of reversibly charging and discharging 70% or more lithium ions to realize a high capacity, are attracting attention as positive electrode active materials. In particular, since the capacity of lithium nickel transition metal oxides having nickel-rich (Ni-rich) compositions, that is, compositions in which nickel accounts for more than 50 mol% among all transition metals therein, rapidly increases with an increasing nickel content, these lithium nickel transition metal oxides may be used as positive electrode active materials capable of implementing high-capacity secondary batteries at relatively low manufacturing costs.

For stationary applications, where size and weight are of secondary importance, other active materials have also been developed. For example, lithium iron phosphate batteries may be used in battery energy storage systems as secondary batteries.

However, secondary batteries may produce gas during operation. Gas may be produced during normal operation, near to and at the end of life of a secondary battery, due to abuse, or resulting from malfunction. For example, lithium transition metal oxides may cause the formation of gas when secondary batteries are repeatedly charged and discharged. Gas may also, for example, be generated by the decomposition of an electrolyte. The amount of electrolyte decomposition and gas generation may vary depending on the type of metal used in a positive electrode, such amount being significant, for example, when a Ni-rich lithium transition metal oxide is used.

### SUMMARY

The present disclosure is directed to providing porous inorganic particles which are configured to be added to an inner portion and/or an outer portion of a secondary battery. For example, porous inorganic particles may be added to a Ni-rich lithium composite transition metal oxide active material in which nickel accounts for 50 mol% or more of all metals excluding lithium.

The porous inorganic particles of the present disclosure may adsorb gas molecules. For example, such adsorption may be of gas molecules generated in a secondary battery by an electrochemical reaction between an active material and an electrolyte, such as CO, CO₂, H₂, CH₄, and C₂H₄. The porous inorganic particles may suppress or prevent the occurrence of a so-called secondary battery swelling phenomenon caused by a gas and thus, may contribute to solving a potential safety problem of a secondary battery.

In particular, since the porous inorganic particles of the present disclosure have excellent gas capturing ability, a Ni-rich lithium composite transition metal oxide may be stably used.

In other words, the porous inorganic particles of the present disclosure are advantageous in overcoming the limitations of a Ni-rich lithium composite transition metal oxide that has a great advantage in terms of the capacity of a secondary battery but has limited use due to causing gas-related problems, and are advantageous in ultimately solving the conventional problems.

Hereinafter, the present disclosure will be described in detail in the following order: porous inorganic particles, electrodes, a secondary battery, a battery pack, and a battery module. However, terms or words used in this specification and the appended claims should not be construed as being limited to commonly used meanings or meanings in dictionaries and, based on the principle that the disclosure may appropriately define concepts and terms in order to describe the disclosed aspects, the terms and words should be interpreted with meanings and concepts which are consistent with the technical spirit of the present disclosure.

### BRIEF DESCRIPTION OF THE DRAWINGS

The above and other objects, features and advantages of the present disclosure will become more apparent to those of ordinary skill in the art by describing exemplary illustrations thereof in detail with reference to the accompanying drawings.
FIG. 1 shows schematically a porous inorganic particle for lithium ion batteries.
FIG. 2 shows schematically an electrode for a lithium ion battery including porous inorganic particles.
FIG. 3 shows schematically a lithium ion battery including porous inorganic particles.
FIG. 4 shows a graph of the results of Experimental Example 1.
FIG. 5 shows a graph of the results of Experimental Example 2.
FIG. 6 shows a graph of the results of Experimental Example 3.
FIG. 7 shows scanning electron microscope (SEM) images of a positive electrode as manufactured in Example 2-1.

### DETAILED DESCRIPTION

Porous inorganic particles may be added to an inner portion and/or an outer portion of a secondary battery that generates gases during operation. For example, porous inorganic particles may be included in a secondary battery with a Ni-rich lithium composite transition metal oxide active material. The nickel may, for example, account for 50 mol% or more of all metals excluding lithium. Porous inorganic particles may also, for example, be included in a lithium iron phosphate secondary battery. Porous inorganic particles may include oxides of four or more types of metals selected from the group consisting of Al, Si, Na, Ca, and K. For example, the porous inorganic particles may be a porous composite formed by treating oxides, Al₂O₃, SiO₂, and Na₂O, with sodium hydroxide, hydrochloric acid, calcium carbonate, and potassium hydroxide.

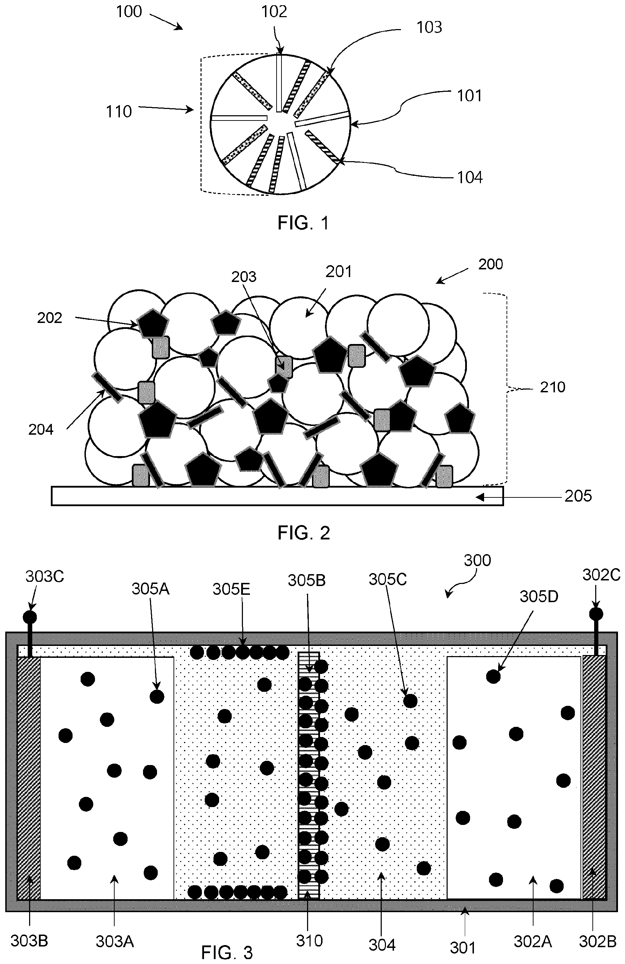

Reference is now made to FIG. 1, which shows schematically a porous inorganic particle 100 for lithium ion batteries. Porous inorganic particle 100 comprises a core 101 and pores 102, 103, and 104. Core 101 of particle 100 may include a measurable diameter 110, such as a diameter between 1 to 5 micrometers (µm). Particles may be shaped as spherical particles, oblong particles (rods), or oblate particles (flakes). Standard milling and crushing techniques may be selected to create the desired particle sizes and shapes. The metal composition of particles (such as the ratios of Al, Si, Na, Ca, and K) and thermal processing (such as annealing) may determine the pore sizes of pores 102, 103, and 104. For example, pores 102 may comprise a pore size with an average diameter between 0.32 and 0.36 nanometer (nm). For example, pores 103 may comprise a pore size with an average diameter between 0.36 and 0.4 nm. For example, pores 104 may comprise a pore size with an average diameter between 0.40 and 0.48 nm. Pores 102, 103 and 104, may be selectively used to adsorb gas molecules of CO (kinematic diameter 0.32 nm), CO₂ (kinematic diameter 0.33 nm), H₂ (kinematic diameter 0.29 nm), CH₄ (kinematic diameter 0.38 nm), and C₂H₄ (kinematic diameter 0.39 nm). The distribution of pore sizes may be selected by the ratio of metals and thermal processing so as to provide adsorption of a predetermined amount and relative amounts of the different gases. The amounts of gases adsorbed is based on the adsorption affinity of each type of gas, for each ratio of metals, and each thermal processing.

Particles may be shaped to adhere to a substrate, for layering of the particles on the substrate, for incorporation thereof into the active electrode materials, or the like. For example, the particles shown in the figures are symbolically represented by circles or spheres, but this representation is exemplary and the actual three-dimensional shape may be as flakes, irregular shaped particles, rods, filaments, or the like. Porous inorganic particles may, for example, be shaped as flakes comprising an average thickness equal to the smallest particle dimension value (between 1 to 5 µm). Particles may, for example, comprise irregular shapes but have a smallest particle dimension value (between 1 to 5 µm), such as the short dimension of each particle.

The particle size and shape may be measured using a laser diffraction method or an image analysis method configured to the size and shape of the designed particles. For example, laser diffraction of particles may be performed with a Fritsch ANALYSETTE 22 NeXT Nano, a Fritsch ANALYSETTE 22 NeXT Micro, a Beckman Coulter LS 13 320 XR Particle Size Analyzer, a Malvern Panalytical Mastersizer 3000, a Malvern Panalytical Zetasizer Pro, a Malvern Panalytical NanoSight NS300, a HORIBA Partica LA-960V2, a Microtrac S3500, a Microtrac BLUEWAVE, a Sympatec HELOS, or the like. For example, ISO 13320:2020 describes the requirements for laser diffraction methods, as well as instrument qualification and size distribution measurement standards. Laser diffraction methods may determine the particle size distribution of spherical particles, and the spherical-equivalent size distributions for non-spherical particles. A report from one of the above mentioned laser diffraction analyzers may produce a frequency versus size distribution of particles which, when fitted with a curve, may determine the accumulate percentage versus size curve. The measurements or the fitted curve may determine the average particle size, the 5th percentile size (the inclusive size limit of the 5% smallest particles), the 50th percentile size (median), and the 95th percentile. For example, a distribution of spherical particles may have an average size (diameter) of 2.5 µm, a median size of 3 µm, a 5th percentile size of 1 µm, and a 95th percentile size of 6 µm.

Pore size may be measured by transmission electron microscopy (TEM) and image analysis, where the pores are first visualized using TEM and then the dimensions of each pore are measured. By analyzing the dimensions, the diameter of each pore may be calculated. For example, when a pore is measured as having dimensions of 0.4 nm by 0.6 nm, it may be calculated that the minimum of these two measurements is the pore diameter, assuming a pore with approximately circular cross section. By measuring a large number of pores, the distribution of pore diameters may be determined. For example, it may be determined that 95% of the pores have a diameter between 0.3 to 0.5 nm, and that these diameters may be grouped into 3 groups. The first group including 40% of the pores having a diameter between 0.3 to 0.36 nm, the second group including 35% of the pores having a diameter between 0.36 to 0.40 nm, the third group of 25% of the pores having a diameter between 0.4 and 0.6 nm.

In one specific example, the porous inorganic particles of the present disclosure may be produced by the following method of Preparation Example 1.

### Preparation of Example 1

After dissolving sodium silicate (Na₂SiO₂) in 500 ml of distilled water in a 1,000 ml flask, dissolving aluminum oxide (Al₂O₃) in 100 ml of distilled water in a 500 ml beaker, and dissolving sodium hydroxide (NaOH) in 100 ml of distilled water in a 500 ml beaker, the sodium hydroxide solution was slowly added to the aluminum oxide solution to obtain sodium aluminate (NaAlO₂).

Subsequently, the 1,000 ml flask containing the sodium silicate solution was placed in a water bath and the temperature was raised to 90 °C. When it was confirmed that the temperature of the solution was 90 °C, the obtained sodium aluminate was slowly added to the 1,000 ml flask. Since gelling occurred at this time, it was necessary that the sodium aluminate was slowly added. In other words, when the gel was liquefied by adding a certain amount of solution, more solution was then added, and this process was repeated.

After all the reactants were added, the mixture was stirred for one hour, filtered, and washed with distilled water, and thus a first porous composite was obtained. The particle size of the first porous composite was controlled to an average diameter of 3 µm by ball milling.

The first porous composite was added to a 500 ml flask, and an aqueous hydrochloric acid (HCl) solution, calcium carbonate (CaCO₃), and potassium hydroxide (KOH) were added. Since gelling occurred at this time, the reactants were slowly added, whereby more reactants were only added when the gel was liquefied, and this process was repeated.

When the addition of the solutions was completed and the pH value remained constant, the stirrer was removed, and the resultant was allowed to gel. When the gelling was completed, calcium chloride and potassium chloride were removed using distilled water.

The sufficiently washed sample was dried at 350 °C, and thus a white second porous composite, that is, the porous inorganic particles of the present disclosure, was obtained. Specifically, a C₂H₄ gas was generated in the manufacture of the first porous composite, and CO₂ was generated in the manufacture of the second porous composite, and since the generated C₂H₄ and CO₂ worked together to form pores of various sizes, the porous inorganic particles of the present disclosure had a wide poresize spectrum.

In one specific example, the porous inorganic particles may prevent the swelling of a secondary battery by capturing gas molecules generated in an electrochemical reaction between the Ni-rich lithium composite transition metal oxide and an electrolyte. Here, the capture of gas molecules may include the adsorption of the gas as it enters pores of the porous inorganic particles.

In one specific example, the porous inorganic particles may be added to: at least one of a positive electrode, a negative electrode, a separator, an electrolyte, and an inner surface of a battery case, which are in an inner portion of the secondary battery; and/or at least one of an outer surface of the battery case and an electrode terminal, which are in an outer portion of the secondary battery.

In one specific example, the porous inorganic particles may be mixed in a positive electrode active material layer and/or a negative electrode active material layer of the secondary battery, or may be applied onto a surface of the positive electrode active material layer and/or a negative electrode active material layer.

In one specific example, the porous inorganic particles may contain Al, Si, Na, and K, and the ratio of the weight of K to the weight of Al may be 0.3 to 0.5 and specifically 0.35 to 0.45, and the ratio of the weight of Na to the weight of Al may be 0.3 to 0.5 and specifically 0.35 to 0.45.

In one specific example, in the porous inorganic particles, the ratio of the weight of Si to the weight of Al may be 0.8 to 1.2 and specifically 0.9 to 1.1.

In one specific example, the porous inorganic particles may additionally contain Ca, and the ratio of the weight of Ca to the weight of Al may be 0.1 to 0.3 and specifically 0.13 to 0.2.

As described above, when each one of the elements satisfies the above-described ratios with respect to Al, the ability to adsorb gas types generated inside a secondary battery is improved. This seems to be because the proportion and distribution of these metal elements in the porous inorganic particles affect the physical and chemical interactions with the gas generated inside the secondary battery. In addition, the proportion of the metal elements affects the physical structure of the porous inorganic particles, and the pore diameter spectrum may be changed accordingly. This change in pore diameter spectrum may be beneficial when capturing gas molecules with more diverse compositions and sizes.

In one specific example, the porous inorganic particles may include a plurality of pores, and may be able to adsorb gas molecules in such a way that gas molecules introduced into the pores are physically and/or chemically adsorbed. Here, the pores may include a plurality of pores belonging to pore groups having different average diameters in order to adsorb gas molecules having different molecular sizes and compositions.

In one specific example, the porous inorganic particles may include a plurality of pores belonging to pore groups having different average diameters. For example, the pore groups of the porous inorganic particles may include: a first pore group having an average diameter of 0.32 nm to 0.36 nm; and a second pore group having an average diameter of 0.36 nm to 0.48 nm. A TEM and image analysis are, for example, used to measure pore size distributions.

In one specific example, the porous inorganic particles may include 30 wt% to 40 wt% Al, 30 wt% to 40 wt% Si, 10 wt% to 20 wt% Na, 10 wt% to 20 wt% K, and 3 wt% to 9 wt% Ca, based on the total weight of metals.

In one specific example, the average particle diameter of the porous inorganic particles may be in the range of 1 to 5 µm.

When the average particle diameter exceeds 5 µm, the resistance of an electrode in which the porous inorganic particles are included may increase and thus, electrical performance may be degraded. On the other hand, when the average particle diameter is less than 1 µm, since a small number of pores are formed, the effect of capturing gas may be reduced, which is not desirable.

In one specific example, the porous inorganic particles may have a specific surface area of 1.5 to 2.5 m²/g. For example, a Brunauer-Emmett-Teller (BET) surface measurement method may be used to measure the specific surface area of the porous inorganic particles. For example, a Horiba SA-9600 Surface Area Analyzer may be used to measure the specific surface area of the porous inorganic particles. For example, a Microtrac Belsorp MAX G surface area and pore size distribution analyzer may be used to measure pore size distribution.

It is not preferable that the specific surface area exceeds the above-described range because, in this case, although a large amount of gas may be captured, the porous inorganic particles having a large average particle diameter may increase the resistance of an electrode, and it is not preferable that the specific surface area is below the above-described range because, in this case, the amount of gas that may be captured is reduced.

In one specific example, the gas molecules may include two or more selected from the group consisting of CO, CO₂, H₂, CH₄, and C₂H₄.

In one specific example, the gas molecules may include CO₂ and C₂H₄.

In one specific example, particles of the Ni-rich lithium composite transition metal oxide may be represented by Chemical Formula 1 or Chemical Formula 2:

[Chemical Formula 1] Liₚ(Ni_{1-(x1+y1+z1)}Coₓ₁M^{a}_{y1}M^{b}_{z1})O₂

[Chemical Formula 2] Liₚ(Ni_{2-(x2+y2+z2)}Coₓ₂M^{a}_{y2}M^{b}_{z2})O₄

In Chemical Formula 1, M^{a} is one or more selected from the group consisting of Mn and Al, M^{b} is one or more selected from the group consisting of Zr, B, W, Mg, Ce, Hf, Ta, Ti, Sr, Ba, F, P, S, and La, and 0.9≤p≤1.1, 0≤x1≤0.3, 0≤y1≤0.3, 0≤z1≤0.1, and 0<x1+y1+z1≤0.5.

In Chemical Formula 2, M^{a} is one or more selected from the group consisting of Mn and Al, M^{b} is one or more selected from the group consisting of Zr, B, W, Mg, Ce, Hf, Ta, Ti, Sr, Ba, F, P, S, and La, and 1.8≤p≤2.2, 0≤x2≤0.6, 0≤y2≤0.6, 0≤z2≤0.2, and 0<x2+y2+z2≤1.0.

In one specific example, x1+y1+z1 in Chemical Formula 1 may be 0.4 or less, and x2+y2+z2 in Chemical Formula 2 may be 0.8 or less.

In one specific example, the Ni-rich lithium composite transition metal oxide particles may be used as a positive electrode active material and/or a negative electrode active material of a secondary battery, and specifically, the Ni-rich lithium composite transition metal oxide particles may be used as a positive electrode active material.

In one specific example, the secondary battery may include a positive electrode, a negative electrode, a separator, an electrolyte, and a battery case.

Another aspect of the present disclosure provides an electrode for a secondary battery including the porous inorganic particles. In one specific example, the electrode may be manufactured by applying an electrode mixture to one or both sides of an electrode current collector and curing the electrode mixture. Here, the electrode mixture may include an electrode active material, a solvent, a binder, and the above-described porous inorganic particles.

Reference is now made FIG. 2, which shows schematically an electrode 200 for a lithium ion battery including porous inorganic particles 202. In this example the porous inorganic particles 202 are incorporated into the active material layer 210 of the electrode 200. The electrode 200 includes a current collector 205. The active material layer 210 includes active material particles 201. For example, active material particles 201 include a lithium nickel-rich transition metal oxide. The active material layer 210 includes porous inorganic particles 202. The active material layer 210 includes binder 203 and conductive additive material 204. Active material layer 210 may have an average thickness of 3 to 500 µm.

The porous inorganic particles 202 and the active material particles 201 may have a diameter corresponding to the average thickness of the active material layer 210. For example, when the active material layer 210 has an average thickness of 3 µm, the porous inorganic particles 202 may have an average diameter between 1 and 1.5 µm. For example, when the active material layer 210 has an average thickness of 5 µm, the porous inorganic particles 202 may have an average diameter between 1 and 2 µm. For example, when the active material layer 210 has an average thickness of between 3 to 10 µm, the porous inorganic particles 202 may have an average diameter between 1 and 2 µm. For example, when the active material layer 210 has an average thickness of between 5 and 30 µm, the porous inorganic particles 202 may have an average diameter between 1 and 4 µm. For example, when the active material layer 210 has an average thickness of between 10 and 50 µm, the porous inorganic particles 202 may have an average diameter between 1.5 and 5 µm. For example, when the active material layer 210 has an average thickness of at least 40 µm, the porous inorganic particles 202 may have an average diameter between 3 and 5 µm.

In one specific example, the electrode may be a positive electrode or a negative electrode.

In one specific example, the positive electrode of the present disclosure may be manufactured by applying a positive electrode mixture, which is a mixture of a positive electrode active material, the porous inorganic particles, a conductive material, and a binder, onto a positive electrode current collector and drying the same, and when necessary, a filler may be additionally added to the positive electrode mixture.

The positive electrode active material may include the Ni-rich lithium composite transition metal oxide hereinabove, which is represented by Chemical Formula 1 or Chemical Formula 2, and may additionally include the following materials capable of inducing an electrochemical reaction. Non-limiting examples of these positive electrode active materials may include lithium cobalt oxide (LiCoO₂), a lithium oxide having a spinel crystal structure (LiMn₂O₄), lithium iron phosphate (LFP) having an olivine structure (LiFePO₄), and a lithium transition metal composite oxide formed by substituting any of these lithium composite oxides with one or more transition metals. For example, positive electrode active materials may include more than one olivine-type phase of LFP. Other olivine compounds related to LFP, such as Li₁₋ₓMₓFePO₄, LiFePO_{4-z}M_{z}, etc. (where M may be combinations of Co, Mn and Ti), may have a similar crystal structure to LiFePO₄, and may be used in a cathode. The olivine structures created with lithium, iron, and phosphate combined with manganese, cobalt, and/or titanium may also be referred to as LFP-type batteries.

Non-limiting examples of the lithium transition metal composite oxide may include: a layered compound such as lithium cobalt oxide (LiCoO₂) or lithium nickel oxide (LiNiO₂) substituted with one or more transition metals; a lithium manganese oxide substituted with one or more transition metals; a lithium nickel-based oxide represented by Chemical Formula LiNi_{1-y}M_{y}O₂ (here, M is Co, Mn, Al, Cu, Fe, Mg, B, Cr, Zn, or Ga and includes one or more of the above-described elements, and 0.01≤y≤0.7); a lithium nickel cobalt manganese composite oxide represented by
Li_{1+z}Ni_{b}Mn_{c}Co_{1-(b+c+d)}M_{d}O₍₂₋ₑ₎Aₑ (here, -0.5≤z≤0.5, 0.1≤b≤0.8, 0.1≤c≤0.8, 0≤d≤0.2, 0≤e≤0.2, b+c+d<1, M is Al, Mg, Cr, Ti, Si, or Y, and A is F, P, or Cl), such as Li_{1+z}Ni_{1/3}Co_{1/3}Mn_{1/3}O₂ or Li_{1+z}Ni₀.₄Mn_{0.4}Co_{0.2}O₂; and an olivine-based lithium metal phosphate represented by Chemical Formula Li₁₊ₓM_{1-y}M'_{y}PO_{4-z}X_{z} (here, M is a transition metal and preferably Fe, Mn, Co, or Ni, M' is Al, Mg, or Ti, X is F, S, or N, and -0.5≤x≤+0.5, 0≤y≤0.5, and 0≤z≤0.1).

The positive electrode current collector is generally formed with an average thickness of 3 to 500 µm. This positive electrode current collector and a current collector extension are not particularly limited as long as they do not cause a chemical change in a battery and have high conductivity, and, for example, stainless steel, aluminum, nickel, titanium, calcined carbon, or aluminum or stainless steel whose surface has been treated with carbon, nickel, titanium, silver, or the like may be used. The positive electrode current collector and the current collector extension may have fine irregularities formed in a surface thereof to increase the adhesion of a positive electrode active material, and may be used in any of various forms such as a film, a sheet, a foil, a net, a porous material, a foam, and a non-woven fabric.

The conductive material is typically added in an amount of 1 to 30% by weight based on the total weight of the mixture including the positive electrode active material. The conductive material is not particularly limited as long as it does not cause a chemical change in a battery and has conductivity, and, for example, graphite such as natural graphite or artificial graphite, carbon black such as acetylene black, Ketjen black, channel black, furnace black, lamp black, or thermal black, a conductive fiber such as a carbon fiber or a metal fiber, fluorocarbon or a metal powder such as an aluminum powder or a nickel powder, a conductive whisker such as potassium titanate, a conductive metal oxide such as titanium oxide, a conductive material such as a polyphenylene derivative, or the like may be used.

The binder is a component that aids in the binding of the active material, a conductive material, and the like, to one another and to a current collector, and is typically added in an amount of 1 to 30% by weight based on the total weight of the mixture including the positive electrode active material. Examples of the binder may include polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene terpolymer (EPDM), a sulfonated EPDM, styrene-butadiene rubber, fluororubber, and any one of various copolymers.

The filler is a component that suppresses the expansion of a positive electrode and is optionally used, and is not particularly limited as long as it does not cause a chemical change in a battery and is a fibrous material, and, for example, an olefin-based polymer such as polyethylene or polypropylene or a fibrous material such as glass fiber or carbon fiber may be used.

The negative electrode may be manufactured by applying a negative electrode active material and the porous inorganic particles onto a negative electrode current collector and drying the same, and optionally, the above-described components may be additionally included as needed.

The negative electrode current collector is generally formed with an average thickness of 3 to 500 µm. This negative electrode current collector is not particularly limited as long as it does not cause a chemical change in a battery and has conductivity, and, for example, copper, stainless steel, aluminum, nickel, titanium, calcined carbon, copper or stainless steel whose surface has been treated with carbon, nickel, titanium, silver, or the like, an aluminum-cadmium alloy, or the like may be used. In addition, as in the case of the positive electrode current collector, the negative electrode current collector may have fine irregularities in a surface thereof to increase the adhesion of a negative electrode active material, and may be used in any of various forms such as a film, a sheet, a foil, a net, a porous material, a foam, and a non-woven fabric.

The negative electrode active material may include the Ni-rich lithium composite transition metal oxide of the previous examples, which is represented by Chemical Formula 1 or Chemical Formula 2, and may additionally include the following materials capable of inducing an electrochemical reaction. Examples of these negative electrode active materials may include: carbon such as non-graphitizable carbon or graphite-based carbon; a metal composite oxide such as LiₓFe₂O₃ (0≤x≤1), LiₓWO₂ (0≤x≤1), or SnₓMe₁₋ₓMe'_{y}O_{z} (Me: Mn, Fe, Pb, Ge; Me': Al, B, P, Si, Group 1, 2, or 3 element of the periodic table, or a halogen; 0<x≤1; 1≤y≤3; and 1≤z≤8); lithium metal; a lithium alloy; a silicon-based alloy; a tin-based alloy; a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer such as polyacetylene; a Li-Co-Ni-based material, and the like.

Still another aspect provides a secondary battery including porous inorganic particles.

The secondary battery includes a positive electrode, a negative electrode, a separator, an electrolyte, and a battery case. For example, the positive electrode includes the Ni-rich lithium composite transition metal oxide active material, in which nickel accounts for 50 mol% or more of all transition metals excluding lithium. The secondary battery additionally may include the porous inorganic particles configured to be added to an inner portion and/or an outer portion of the battery case, and the porous inorganic particles include oxides of four or more types of metals selected from the group consisting of Al, Si, Na, Ca, and K and are capable of preventing the swelling of the secondary battery by capturing gas molecules generated in an electrochemical reaction between the active material and an electrolyte.

Reference is made to FIG. 3, which shows schematically a lithium ion battery 300 including porous inorganic particles 305A-305E. Lithium ion battery 300 includes a case 301, a cathode active material 303A, a cathode current collector 303B, a positive terminal 303C, a separator 310, an anode active material 302A, an anode current collector 302B, a negative terminal 302C, and an electrolyte 304. Porous inorganic particles 305A may be included in cathode active material 303A. Porous inorganic particles 305B may be included in or on separator 310. Porous inorganic particles 305C may be included in electrolyte 304. Porous inorganic particles 305D may be included in anode active material 302A. Porous inorganic particles 305E may be included on an inner surface of case 301.

In one specific example, the secondary battery may be a lithium (Li) secondary battery such as a Li-ion secondary battery, a Li-polymer secondary battery, or a Li-ion polymer secondary battery, which has advantages such as high energy density, high discharge voltage, and high output stability.

In one specific example, the separator is interposed between the positive electrode and the negative electrode, and an insulating thin film having high ion permeability and high mechanical strength is used. The separator typically has a pore diameter of 0.01 to 10 µm and an average thickness of 5 to 300 µm. For example, as the separator, an olefin-based polymer such as polypropylene having chemical resistance and hydrophobicity, or a sheet or non-woven fabric made of glass fiber, polyethylene, or the like is used. When a solid electrolyte such as a polymer is used as the electrolyte, the solid electrolyte may also serve as the separator.

The electrolyte may be a lithium salt-containing non-aqueous electrolyte including a non-aqueous electrolyte and a lithium salt. As the non-aqueous electrolyte, a non-aqueous organic solvent, an organic solid electrolyte, an inorganic solid electrolyte, or the like may be used, but the present disclosure is not limited thereto.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimethoxyethane, tetrahydroxy franc, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxymethane, a dioxolane derivative, sulfolane, methyl sulfolane, 1,3-dimethyl-2-imidazolidinone, a propylene carbonate derivative, a tetrahydrofuran derivative, an ether, methyl propionate, or ethyl propionate may be used.

As the organic solid electrolyte, for example, a polyethylene derivative, a polyethylene oxide derivative, a polypropylene oxide derivative, a phosphate ester polymer, polyagitation lysine, polyester sulfide, polyvinyl alcohol, polyvinylidene fluoride, a polymer containing an ionic dissociation group, or the like may be used.

As the inorganic solid electrolyte, for example, a lithium nitride, halide, or sulfate such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, or Li₃PO₄-Li₂S-SiS₂ may be used.

The lithium salt is a material that is highly soluble in the non-aqueous electrolyte, and, for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, chloroborane lithium, lower aliphatic carbonic acid lithium, lithium tetraphenylborate, an imide, or the like may be used.

In addition, for the purpose of improving charge/discharge characteristics, flame retardancy, and the like, the non-aqueous electrolyte may additionally include, for example, pyridine, triethyl phosphite, triethanolamine, a cyclic ether, ethylenediamine, n-glyme, hexaphosphoric triamide, a nitrobenzene derivative, sulfur, a quinoneimine dye, N-substituted oxazolidinone, N,N-substituted imidazolidine, an ethylene glycol dialkyl ether, an ammonium salt, pyrrole, 2-methoxyethanol, aluminum trichloride, or the like. In some cases, the non-aqueous electrolyte may additionally include: a halogen-containing solvent such as carbon tetrachloride or ethylene trifluoride to attain non-flammability; carbon dioxide gas to have improved high-temperature storage characteristics; or fluoroethylene carbonate (FEC), propene sultone (PRS), or the like.

In one specific example, a lithium salt-containing non-aqueous electrolyte may be prepared by adding a lithium salt such as LiPF₆, LiClO₄, LiBF₄, or LiN(SO₂CF₃)₂ to a mixed solvent of a cyclic carbonate such as ethylene carbonate (EC) or propylene carbonate (PC), which is a high dielectric solvent, and a linear carbonate such as diethyl carbonate (DEC), dimethyl carbonate (DMC), or ethyl methyl carbonate (EMC), which is a low viscosity solvent.

In one specific example, the battery case may be a cylindrical metal can-type battery case, a prismatic metal can-type battery case, or a pouch-type battery case formed of a laminate sheet. Secondary batteries having metal can-type battery cases may include a vent through which a gas generated in the secondary battery is discharged, and thus are relatively less vulnerable to gas generation. On the other hand, it is difficult to provide a vent for the pouch-type battery cases, so secondary batteries having pouch-type battery cases are vulnerable to internal gas generation and have relatively low safety against gas generation. The porous inorganic particles may be more suitable for use in secondary batteries having pouch-type battery cases.

### Battery pack and battery module

Yet another aspect provides a battery pack including one or more of the secondary batteries with porous inorganic particles and a battery module including two or more of the battery packs.

The battery pack may additionally include: a plastic or metal exterior material (or cartridge) in which the secondary battery is mounted; and a printed circuit module (PCM) which includes a protection circuit and a safety device and is configured to be mechanically coupled to the exterior material (or cartridge) while being electrically connected to the secondary battery.

When there are two or more secondary batteries, the secondary batteries may be electrically connected in series or in parallel to form a unit cell, and this unit cell may be mounted in the exterior material (or cartridge).

The battery module may include: a housing for accommodating the battery pack; and a battery management system (BMS) which is electrically connected to the battery pack while installed inside or outside the housing, and in some cases, the battery module may include a bracket (or coupling bar) for holding the battery pack in place, a lateral support plate for supporting the battery pack, and a cooling system with air cooling or water cooling.

Meanwhile, hereinafter, the action and effect will be described in more detail through Examples for describing porous inorganic particles and secondary batteries and Comparative Example for demonstrating effects thereof. However, these Examples are merely illustrative of the present invention, and the scope of the present invention is not determined thereby.

### 1. Porous inorganic particles

### <Example 1>

Porous inorganic particles in a powder form were prepared according to Preparation Example 1.

### <Comparative Example 1>

A zeolite derived from Al₂O₃ and SiO₄ and having the following metal composition was used.

**[Table1]**

| | Al (wt%) | Si (wt%) | Na (wt%) | Ca (wt%) | K (wt%) |
|---|---|---|---|---|---|
| Example 1 | 34 | 33 | 13 | 6 | 14 |
| Comparative Example 1 | 40 | 60 | - | - | - |

### <Experimental Example 1>

### Evaluation of amount of gas adsorbed by porous inorganic particles

In order to evaluate the ability of porous inorganic particles to adsorb a gas inside a secondary battery, secondary batteries including the porous inorganic particles of Example 1 or the porous inorganic particles of Comparative Example 1 were manufactured, and a secondary battery not including inorganic particles was manufactured as a control. All of the secondary batteries were manufactured to have the same specifications described below, except for having different porous inorganic particles.
- A positive electrode including a positive electrode active material having a composition of LiNi_{0.8}Co_{0.1}Mn_{0.1}O₂ and inorganic particles;
- A negative electrode including a graphite negative electrode active material and inorganic particles;
- A non-aqueous electrolyte prepared by dissolving LiPF₆ at 1.15 M in a non-aqueous solvent including EC and EMC in a volume ratio of 1:3; and
- A pouch-type case formed of a heat-sealable laminate sheet.

Meanwhile, a secondary battery which has the above-described specification, but includes a positive electrode and a negative electrode not including inorganic particles at all, was manufactured as a control.

The manufactured secondary batteries were overcharged at 2.0 C/22 V. Subsequently, when the secondary batteries expanded, their cases were opened to collect gas using a separate container, and the collected gas was qualitatively and quantitatively (volume) analyzed using a gas chromatography technique.

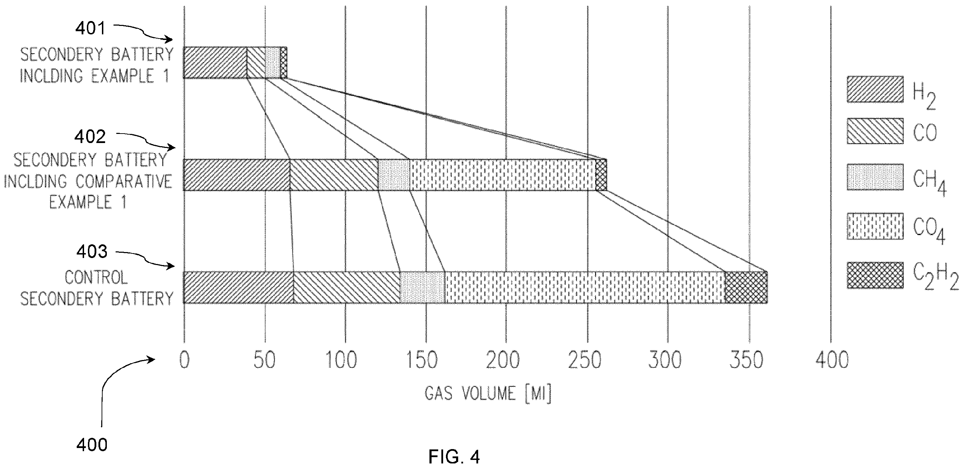

Referring to the results 400 shown in FIG. 4, in the case of the secondary battery where inorganic particles were not used, since no gas was adsorbed inside the battery, a large amount of gas having various components was detected 403.

On the other hand, in the case of the secondary batteries where the inorganic particles of Example 1 as at 401 or of Comparative Example 1 as at 402 were used, irrespective of the different inorganic particle compositions, a significantly smaller amount of gas was detected than in the case of the control. These results suggest that when inorganic particles are used, the gas inevitably generated in a secondary battery may be removed from the electrochemical reaction environment of the secondary battery, and that it is thus possible to suppress the occurrence of secondary battery safety problems of battery expansion caused by the gas.

When Example 1 and Comparative Example 1 are compared by, again, referring to FIG. 4, it may be seen that, in the case of the secondary battery manufactured using the porous inorganic particles of Example 1 as at 401, only a small amount of gas corresponding to about 1/4 of the amount of gas remaining in the secondary battery manufactured using the porous inorganic particles of Comparative Example 1 as at 402 remained, and specifically, in the case of the secondary battery manufactured using the porous inorganic particles of Example 1, all gas components were reduced, and in particular, CO and CO₂ were significantly reduced. In addition, C₂H₄ having a larger molecular size than the CO and the CO₂ was also significantly reduced. These results suggest that, pores having a large enough size to adsorb a gas having a large molecular size had been implemented, and therefore, there was an effect of also capturing smaller molecules using smaller pores formed within the larger pores.

From these results, the porous inorganic particles implemented herein may effectively adsorb a gas generated in a side reaction between an electrode and an electrolyte, and thus may improve the safety of a secondary battery over use of the materials commonly known to adsorb gas, such as Comparative Example 1.

### 2. Secondary battery

### <Example 2-1>

### (1) Manufacture of negative electrode for secondary battery

A mixture including the above-described porous inorganic particles of Example 1, graphite used as a negative electrode active material, conductive carbon used as a conductive material, and polyvinylidene fluoride (PVdF) used as a binder in a ratio of 0.5:84.5:8:7 (inorganic particles:negative electrode active material: conductive material:binder) was mixed with a predetermined amount of N-methyl pyrrolidone (NMP) to prepare a negative electrode active material slurry having a viscosity of 3,500 cPa or less (25 °C), and the negative electrode active material slurry was applied onto a copper current collector, dried, and rolled, and thereby a negative electrode was obtained.

### (2) Manufacture of positive electrode for secondary battery

A mixture including the above-described porous inorganic particles of Example 1, a positive electrode active material having a composition of LiNi_{0.8}Co_{0.1}Mn_{0.1}O₂, conductive carbon used as a conductive material, and PVdF used as a binder in a ratio of 0.5:92.5:4:3 (inorganic particles:positive electrode active material:conductive material:binder) was mixed with NMP to prepare a positive electrode mixture having a viscosity of 3,500 cPa or less (25 °C), and the positive electrode mixture was applied onto an aluminum current collector, dried, and rolled, and thereby a positive electrode was obtained.

### (3) Manufacture of secondary battery

After mounting an electrode assembly formed by interposing a porous polyolefin sheet as a separator between the manufactured positive electrode and negative electrode in a pouch-type battery case formed of a laminate sheet, an electrolyte was injected, and the battery case was sealed by thermal fusion to obtain a secondary battery. Here, the electrolyte was a non-aqueous electrolyte prepared by dissolving LiPF₆ at 1.15 M in a non-aqueous solvent including EC and EMC in a volume ratio of 1:3.

### <Example 2-2>

A secondary battery was manufactured in the same manner as in Example 2-1, except that a positive electrode active material having a composition of LiNi_{0.6}Co_{0.2}Mn_{0.2}O₂ was used in the manufacture of a positive electrode for a lithium secondary battery.

### <Comparative Example 2-1>

A secondary battery was manufactured in the same manner as in Example 2-1, except that, in the manufacture of a positive electrode and a negative electrode for a lithium secondary battery, the addition of porous inorganic particles was omitted, and the positive electrode and the negative electrode were manufactured by increasing the amounts of positive electrode active material and negative electrode active material by the amount of the omitted porous inorganic particles.

### <Comparative Example 2-2>

A secondary battery was manufactured in the same manner as in Example 2-1, except that, in the manufacture of a positive electrode for a lithium secondary battery, a positive electrode active material having a composition of LiNi_{0.6}Co_{0.2}Mn_{0.2}O₂ was used, and in the manufacture of a positive electrode and a negative electrode for a lithium secondary battery, the addition of porous inorganic particles was omitted, and the positive electrode and the negative electrode were manufactured by increasing the amounts of positive electrode active material and negative electrode active material by the amount of the omitted porous inorganic particles.

### <Comparative Example 2-3>

A secondary battery was manufactured in the same manner as in Example 2-1, except that, in the manufacture of a positive electrode for a lithium secondary battery, a positive electrode active material having a composition of LiNi_{0.4}Co_{0.2}Mn_{0.2}O₂ was used.

### <Comparative Example 2-4>

A secondary battery was manufactured in the same manner as in Example 2-1, except that, in the manufacture of a positive electrode for a lithium secondary battery, a positive electrode active material having a composition of LiNi_{0.4}Co_{0.2}Mn_{0.2}O₂ was used, and in the manufacture of a positive electrode and a negative electrode for a lithium secondary battery, the addition of porous inorganic particles was omitted, and the positive electrode and the negative electrode were manufactured by increasing the amounts of positive electrode active material and negative electrode active material by the amount of the omitted porous inorganic particles.

### <Experimental Example 2>

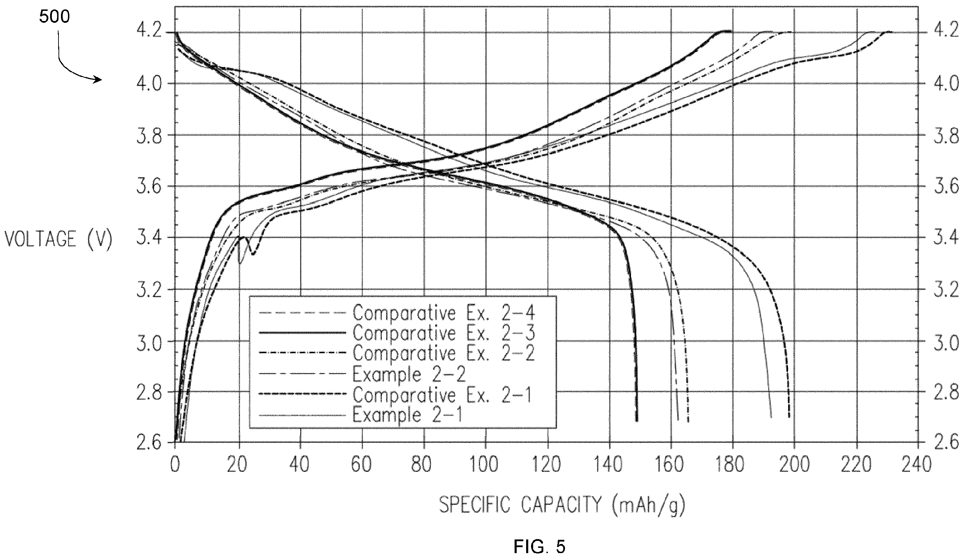

The secondary batteries manufactured in Examples 2-1 and 2-2 and Comparative Examples 2-1 to 2-4 were charged at 25 °C in a CC-CV mode until 0.2 C and 4.2 V and in a CC mode until 0.5 C and 2.7 V. Initial capacity, first-cycle efficiency, and resistance were measured, and the results are shown in Table 2 and FIG. 5, which shows a graph 500 of the results of Experimental Example 2.

**[Table 2]**

| | Example 2-1 | Example 2-2 | Comparative Example 2-1 | Comparative Example 2-2 | Comparative Example 2-3 | Comparative Example 2-4 |
|---|---|---|---|---|---|---|
| Specific capacity (mAh/g) | 192.3 | 162.0 | 198.1 | 164.5 | 148.2 | 148.5 |
| First-cycle efficiency (%) | 85.5 | 83.9 | 86.0 | 83.4 | 83.5 | 83.4 |
| AC-IR (mΩ) | 15.94 | 11.99 | 15.49 | 11.79 | 11.45 | 11.73 |

Referring to Table 2, it may be seen that when a Ni-rich positive electrode active material is used as in the case of a secondary battery, the performance of a secondary battery is excellent, and in particular, the capacity of a secondary battery significantly increases with an increasing nickel content. In addition, it is noteworthy that in the case of the secondary batteries of the Examples, which were manufactured to include porous inorganic particles, there was hardly any degradation in performance.

### <Experimental Example 3>

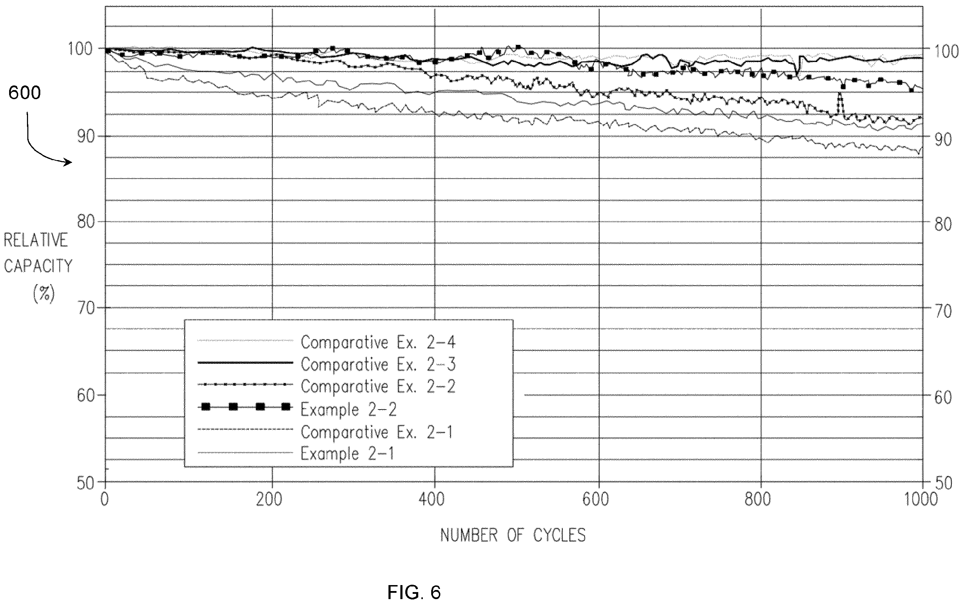

The secondary batteries manufactured in Examples 2-1 and 2-2 and Comparative Examples 2-1 to 2-4 were repeatedly charged and discharged for 1,000 cycles at 25 °C, wherein each cycle consisted of charging in a CC-CV mode until cut-off at 1.0 C and 4.2 V and subsequent discharging in a CC mode until cut-off at 1.0 C and 2.7 V. During the repeated charging and discharging, rates of change in relative capacity over the course of the cycles were evaluated, and the results are shown in FIG. 6.

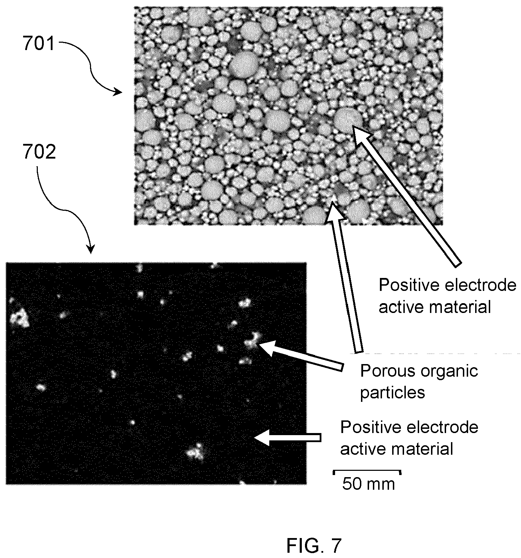

Referring to FIG. 6, Examples 2-1 and 2-2 exhibited significantly improved cycle characteristics as compared to their direct counterparts as at 600, that is, Comparative Examples 2-1 and 2-2. Referring to FIG. 7, the dispersion of porous inorganic particles 702 in an active material 701 may be visually confirmed.

When a gas is generated inside a secondary battery, pressure is applied to components inside the secondary battery, causing an electrode short circuit or swelling of the secondary battery case. When a large amount of gas is generated inside a secondary battery, the secondary battery may explode in severe cases, which is a potential safety problem of a secondary battery that should be overcome.

Therefore, there is a need for technology that is capable of securing the safety of a secondary battery against unavoidable gas generation while using the above-described Ni-rich lithium transition metal oxide as an active material.

In summary, an active material having a Ni-rich transition metal composition has a very high initial capacity, as demonstrated through Experimental Example 2. However, since this Ni-rich active material generates a large amount of gas through a side reaction with an electrolyte, the Ni-rich active material has a limitation in that its performance significantly decreases over the course of cycles. However, surprisingly, porous inorganic particles may be capable of solving this gas-related problem as demonstrated above, and thus, it is possible to overcome the limitations of the Ni-rich active material. In addition, in a secondary battery the limitations of the Ni-rich active material are overcome due to the porous inorganic particles, and thus, a high capacity and excellent lifespan characteristics may be exhibited.

The porous inorganic particles are capable of effectively capturing gas molecules inevitably generated in an electrochemical reaction between an active material and an electrolyte. Therefore, the porous inorganic particles may suppress the occurrence of the so-called secondary battery swelling phenomenon caused by a gas and thus, may improve the safety of a secondary battery.

In particular, since the porous inorganic particles have excellent gas capturing ability, a Ni-rich lithium composite transition metal oxide may be stably used.

In other words, the porous inorganic particles are advantageous in overcoming the limitations of a Ni-rich lithium composite transition metal oxide that has a great advantage in terms of the capacity of a secondary battery but has limited use due to causing gas-related problems, and are advantageous in ultimately solving the conventional problems.

### Clauses:

Clause 1. A secondary battery comprising:
porous inorganic particles added to an the secondary battery,
wherein the porous inorganic particles include oxides of four or more types of metals selected from the group consisting of Al, Si, Na, Ca, and K, and wherein the porous inorganic particles adsorb gas molecules generated in an electrochemical reaction and suppress the occurrence of swelling of the secondary battery.

Clause 2. The secondary battery of clause 1, further comprising a positive electrode and an electrolyte, wherein the positive electrode comprises a Ni-rich lithium composite transition metal oxide active material in which nickel accounts for 50 mol% or more of all metals excluding lithium, wherein the electrochemical reaction is between the positive electrode and the electrolyte.

Clause 3. The secondary battery of clause 1, further comprising a positive electrode and an electrolyte, wherein the positive electrode comprises a lithium iron phosphate active material, wherein the electrochemical reaction is between the positive electrode and the electrolyte.

Clause 4. The secondary battery of clause 1, further comprising: at least one of a positive electrode, a negative electrode, a separator, an electrolyte, and an inner surface of a battery case, and wherein the porous inorganic particles are added to the at least one of a positive electrode, a negative electrode, a separator, an electrolyte, and an inner surface of a battery case.

Clause 5. The secondary battery of clause 1, wherein the porous inorganic particles are mixed in a positive electrode active material layer.

Clause 6. The secondary battery of clause 1, wherein the porous inorganic particles are mixed in a negative electrode active material layer

Clause 7. The secondary battery of clause 1, wherein the porous inorganic particles are applied onto a surface of a positive electrode active material layer.

Clause 8. The secondary battery of clause 1, wherein the porous inorganic particles are applied onto a surface of a negative electrode active material layer

Clause 9. The secondary battery of clause 1, wherein the porous inorganic particles comprise Al, Si, Na, and K,
wherein a ratio of a weight of K to a weight of Al is in a range of 0.3 to 0.5, and a ratio of a weight of Na to a weight of Al is in a range of 0.3 to 0.5.

Clause 10. The secondary battery of clause 1, wherein a ratio of a weight of Si to a weight of Al is in a range of 0.8 to 1.2.

Clause 11. The secondary battery of clause 1, further comprising Ca, and wherein a ratio of a weight of Ca to a weight of Al is in a range of 0.1 to 0.3.

Clause 12. The secondary battery of clause 1, wherein of a total weights of metals, the weight percent of metals comprise:
30 wt% to 40 wt% Al;
30 wt% to 40 wt% Si;
10 wt% to 20 wt% Na;
10 wt% to 20 wt% K; and
3 wt% to 9 wt% Ca.

Clause 13. The secondary battery of clause 1, wherein the porous inorganic particles comprise an average particle diameter ranging from 1 µm to 5 µm.

Clause 14. The secondary battery of clause 1, wherein the porous inorganic particles comprise a plurality of pores having an average diameter between 0.32 and 0.6 nanometers (nm).

Clause 15. The secondary battery of clause 1, wherein the porous inorganic particles comprise a plurality of pore groups having different average diameters,
wherein the plurality of pore groups comprise:
a first pore group having an average diameter of 0.32 nm to 0.36 nm; and
a second pore group having an average diameter of 0.36 nm to 0.48 nm.

Clause 16. The secondary battery of clause 1, wherein the porous inorganic particles comprise a plurality of pore groups having different average diameters,
wherein the plurality of pore groups comprise:
a first pore group having an average diameter from 0.32 nm to 0.36 nm;
a second pore group having an average diameter from 0.36 nm to 0.48 nm; and
a third pore group having an average diameter from 0.48 nm to 0.60 nm.

Clause 17. The secondary battery of clause 1, wherein the porous inorganic particles comprise a specific surface area ranging from 1.5 m²/g to 2.5 m²/g.

Clause 18. The secondary battery of clause 1, wherein the porous inorganic particles of claim 1, wherein the gas molecules include two or more selected from the group consisting of CO, CO₂, H₂, CH₄, and C₂H₄.

Clause 19. The secondary battery of clause 1, wherein the porous inorganic particles of claim 11, wherein the gas molecules include CO₂ and C₂H₄.

Clause 20. The secondary battery of clause 2, wherein the Ni-rich lithium composite transition metal oxide active material is represented by Chemical Formula 1 or Chemical Formula 2:

[Chemical Formula 1] Liₚ(Ni_{1-(x1+y1+z1)}Coₓ₁M^{a}_{y1}M^{b}_{z1})O₂

[Chemical Formula 2] Liₚ(Ni_{2-(x2+y2+z2)}Coₓ₂M^{a}_{y2}M^{b}_{z2})O₄

wherein, in Chemical Formula 1, M^{a} is one or more selected from the group consisting of Mn and Al, M^{b} is one or more selected from the group consisting of Zr, B, W, Mg, Ce, Hf, Ta, Ti, Sr, Ba, F, P, S, and La, and 0.9≤p≤1.1, 0≤x1≤0.3, 0≤y1≤0.3, 0≤z1≤0.1, and 0<x1+y1+z1≤0.5, and
in Chemical Formula 2, M^{a} is one or more selected from the group consisting of Mn and Al, M^{b} is one or more selected from the group consisting of Zr, B, W, Mg, Ce, Hf, Ta, Ti, Sr, Ba, F, P, S, and La, and 1.8≤p≤2.2, 0≤x2≤0.6, 0≤y2≤0.6, 0≤z2≤0.2, and 0<x2+y2+z2≤1.0.

Clause 21. The secondary battery of clause 20, wherein, in Chemical Formula 1, x1+y1+z1 is 0.4 or less, and in Chemical Formula 2, x2+y2+z2 is 0.8 or less.

Clause 22. Porous inorganic particles for use in a secondary battery, comprising oxides of four or more types of metals selected from the group consisting of Al, Si, Na, Ca, and K, and wherein the oxides are configured to adsorb gas molecules generated in an electrochemical reaction of the secondary battery.

Clause 23. The porous inorganic particles of clause 22, wherein the electrochemical reaction is between a Ni-rich lithium composite transition metal oxide of the secondary battery and an electrolyte of the secondary battery.

Clause 24. The porous inorganic particles of clause 22, wherein an occurrence of swelling of the secondary battery is suppressed.

Clause 25. The porous inorganic particles of clause 22, wherein the porous inorganic particles are added to:
at least one of a positive electrode, a negative electrode, a separator, an electrolyte, and an inner surface of a battery case provided in an inner portion of the secondary battery.

Clause 26. The porous inorganic particles of clause 22, wherein the porous inorganic particles are mixed in at least one of a positive electrode active material layer of the secondary battery and a negative electrode active material layer of the secondary battery.

Clause 27. The porous inorganic particles of clause 22, wherein the porous inorganic particles are applied onto at least one of a positive surface of a positive electrode active material layer and a negative surface of a negative electrode active material layer.

Clause 28. The porous inorganic particles of clause 22, comprising Al, Si, Na, and K,
wherein the ratio of the weight of K to the weight of Al is in the range of 0.3 to 0.5, and the ratio of the weight of Na to the weight of Al is in the range of 0.3 to 0.5.

Clause 29. The porous inorganic particles of clause 22, wherein the ratio of the weight of Si to the weight of Al is in the range of 0.8 to 1.2.

Clause 30. The porous inorganic particles of clause 22, wherein the ratio of the weight of Ca to the weight of Al is in the range of 0.1 to 0.3.

Clause 31. The porous inorganic particles of clause 22, comprising, based on the total weight of metals:
30 wt% to 40 wt% Al;
30 wt% to 40 wt% Si;
10 wt% to 20 wt% Na;
10 wt% to 20 wt% K; and
3 wt% to 9 wt% Ca.

Clause 32. The porous inorganic particles of clause 22, comprising an average particle diameter ranging from 1 µm to 5 µm.

Clause 33. The porous inorganic particles of clause 22, comprising a plurality of pores having an average diameter between 0.32 and 0.6 nanometers (nm).

Clause 34. The porous inorganic particles of clause 22, comprising a plurality of pore groups having different average diameters,
wherein the plurality of pore groups include:
a first pore group having an average diameter of 0.32 nm to 0.36 nm; and
a second pore group having an average diameter of 0.36 nm to 0.48 nm.

Clause 35. The porous inorganic particles of clause 22, comprising a plurality of pore groups having different average diameters,
wherein the plurality of pore groups include:
a first pore group having an average diameter from 0.32 nm to 0.36 nm;
a second pore group having an average diameter from 0.36 nm to 0.48 nm; and
a third pore group having an average diameter from 0.48 nm to 0.60 nm.

Clause 36. The porous inorganic particles of clause 22, comprising a specific surface area ranging from 1.5 m²/g to 2.5 m²/g.

Clause 37. The porous inorganic particles of clause 22, wherein the gas molecules comprise two or more selected from the group consisting of CO, CO₂, H₂, CH₄, and C₂H₄.

Clause 38. The porous inorganic particles of clause 22, wherein the gas molecules comprise CO₂ and C₂H₄.

Clause 39. The porous inorganic particles of clause 23, wherein the Ni-rich lithium composite transition metal oxide are represented by Chemical Formula 1 or Chemical Formula 2:

[Chemical Formula 1] Liₚ(Ni_{1-(x1+y1+z1)}Coₓ₁M^{a}_{y1}M^{b}_{z1})O₂

[Chemical Formula 2] Lip(Ni_{2-(x2+y2+z2)}Coₓ₂M^{a}_{y2}M^{b}_{z2})O₄

wherein, in Chemical Formula 1, M^{a} is one or more selected from the group consisting of Mn and Al, M^{b} is one or more selected from the group consisting of Zr, B, W, Mg, Ce, Hf, Ta, Ti, Sr, Ba, F, P, S, and La, and 0.9≤p≤1.1, 0≤x1≤0.3, 0≤y1≤0.3, 0≤z1≤0.1, and 0<x1+y1+z1≤0.5, and
in Chemical Formula 2, M^{a} is one or more selected from the group consisting of Mn and Al, M^{b} is one or more selected from the group consisting of Zr, B, W, Mg, Ce, Hf, Ta, Ti, Sr, Ba, F, P, S, and La, and 1.8≤p≤2.2, 0≤x2≤0.6, 0≤y2≤0.6, 0≤z2≤0.2, and 0<x2+y2+z2≤1.0.

Clause 40. The porous inorganic particles of clause 39, wherein, in Chemical Formula 1, x1+y1+z1 is 0.4 or less, and in Chemical Formula 2, x2+y2+z2 is 0.8 or less.

Clause 41. A secondary battery comprising:
a positive electrode;
a negative electrode;
a separator;
an electrolyte; and
a battery case,
wherein the positive electrode includes, as an active material, a Ni-rich lithium composite transition metal oxide in which nickel accounts for 50 mol% or more of all metals excluding lithium,
the secondary battery additionally includes porous inorganic particles added to an inner portion and/or an outer portion of the battery case, and
the porous inorganic particles include four or more types of metals selected from the group consisting of Al, Si, Na, Ca, and K, and capture gas molecules generated in an electrochemical reaction between the Ni-rich lithium composite transition metal oxide and an electrolyte and thus suppress the occurrence of swelling of the secondary battery.

Clause 42. A battery pack comprising one or more of the secondary batteries of clause 41 as a unit cell.

Clause 43. A battery module comprising one or more of the battery packs of clause 42.

## Claims

1. Porous inorganic particles for use in a secondary battery, comprising oxides of four or more types of metals selected from the group consisting of Al, Si, Na, Ca, and K, and wherein the oxides are configured to adsorb gas molecules generated in an electrochemical reaction of the secondary battery.

2. The porous inorganic particles of claim 1, wherein the electrochemical reaction is between a Ni-rich lithium composite transition metal oxide of the secondary battery and an electrolyte of the secondary battery.

3. The porous inorganic particles of claim 1, wherein the porous inorganic particles are added to:
at least one of a positive electrode, a negative electrode, a separator, an electrolyte, and an inner surface of a battery case provided in an inner portion of the secondary battery.

4. The porous inorganic particles of claim 1, wherein the porous inorganic particles are mixed in at least one of a positive electrode active material layer of the secondary battery and a negative electrode active material layer of the secondary battery.

5. The porous inorganic particles of claim 1, wherein the porous inorganic particles are applied onto at least one of a positive surface of a positive electrode active material layer and a negative surface of a negative electrode active material layer.

6. The porous inorganic particles of claim 1, comprising Al, Si, Na, and K, wherein the ratio of the weight of K to the weight of Al is in the range of 0.3 to 0.5, and the ratio of the weight of Na to the weight of Al is in the range of 0.3 to 0.5.

7. The porous inorganic particles of claim 1, wherein the ratio of the weight of Si to the weight of Al is in the range of 0.8 to 1.2.

8. The porous inorganic particles of claim 1, wherein the ratio of the weight of Ca to the weight of Al is in the range of 0.1 to 0.3.

9. The porous inorganic particles of claim 1, comprising, based on the total weight of metals:
30 wt% to 40 wt% Al;
30 wt% to 40 wt% Si;
10 wt% to 20 wt% Na;
10 wt% to 20 wt% K; and
3 wt% to 9 wt% Ca.

10. The porous inorganic particles of claim 1, comprising an average particle diameter ranging from 1 µm to 5 µm.

11. The porous inorganic particles of claim 1, comprising a plurality of pores having an average diameter between 0.32 and 0.6 nanometers (nm).

12. The porous inorganic particles of claim 1, comprising a specific surface area ranging from 1.5 m²/g to 2.5 m²/g.

13. A secondary battery comprising:
a positive electrode;
a negative electrode;
a separator;
an electrolyte; and
a battery case,
wherein the positive electrode includes, as an active material, a Ni-rich lithium composite transition metal oxide in which nickel accounts for 50 mol% or more of all metals excluding lithium,
the secondary battery additionally includes porous inorganic particles added to an inner portion and/or an outer portion of the battery case, and
the porous inorganic particles include four or more types of metals selected from the group consisting of Al, Si, Na, Ca, and K, and capture gas molecules generated in an electrochemical reaction between the Ni-rich lithium composite transition metal oxide and an electrolyte and thus suppress the occurrence of swelling of the secondary battery.

14. A battery pack comprising one or more of the secondary batteries defined in claim 13 as a unit cell.

15. A battery module comprising one or more of the battery packs defined in claim 14.
